# EUROPÄISCHE PATENTSCHRIFT

(11) **EP 2 864 149 B1**
(45) Veröffentlichungstag und Bekanntmachung des Hinweises auf die Patenterteilung: **24.03.2021**
(21) Anmeldenummer: 13720330.3
(22) Anmeldetag: 25.04.2013
(51) Int. Cl.: B60L 50/10, B60L 58/20, F02N 11/08, H02J 7/14, H02J 7/34

(54) **VERFAHREN UND ANORDNUNG ZUM STARTEN EINES KRAFTFAHRZEUGS**
METHOD AND ARRANGEMENT FOR STARTING A MOTOR VEHICLE
PROCÉDÉ ET DISPOSITIF POUR DÉMARRER UN VÉHICULE À MOTEUR

(30) Priorität: 22.06.2012 DE 102012210605
(43) Veröffentlichungstag der Anmeldung: 29.04.2015
(73) Patentinhaber: Robert Bosch GmbH, 70442 Stuttgart (DE)
(72) Erfinder: WALENTA, Sebastian, 70439 Stuttgart (DE); HARPORT, Stefan, 74535 Mainhardt (DE); RAEUMSCHUESSEL, Stefan, 71254 Ditzingen (DE); STOLLER, Felix, 70565 Stuttgart (DE); SCHOCH, Eberhard, 70469 Stuttgart-Feuerbach (DE); POST, Amalinda, Christina, 71634 Ludwigsburg (DE); KEIL, Oliver, 99891 Winterstein (DE); GEIGER, Albert, 71735 Eberdingen (DE); MOTZ, Juergen, 71711 Steinheim An Der Murr (DE); KARACAY, Turgut, 71263 Weil Der Stadt (DE)
(86) Internationale Anmeldenummer: PCT/EP2013/058587
(87) Internationale Veröffentlichungsnummer: WO 2013/189643

(56) Entgegenhaltungen:
- EP-A1- 1 130 737
- DE-A1- 19 705 634
- DE-A1-102010 004 620
- US-A1- 2007 113 814

## Beschreibung

Die Erfindung betrifft ein Verfahren und eine Anordnung zum Starten eines Kraftfahrzeugs.

### Stand der Technik

Konventionelle Kraftfahrzeuge, die zum Antrieb lediglich einen Verbrennungsmotor aufweisen, umfassen ein einziges Bordnetz mit einer nominellen Spannung. Dagegen umfassen Hybridfahrzeuge, die neben dem Verbrennungsmotor auch eine elektrische Maschine aufweisen, zwei Bordnetze, nämlich ein sogenanntes Hochvolt-Bordnetz, das einen hohen Spannungswert aufweist, sowie ein Niedervolt-Bordnetz, das einen niedrigeren Spannungswert aufweist. Zwischen den beiden genannten Bordnetzen ist ein DC/DC-Konverter bzw. ein DC/DC-Wandler angeordnet, der je nach Bedarf zwischen den beiden Bordnetzen Energie wandeln und somit transferieren kann.

Die Druckschrift WO 2011/012428 A2 beschreibt eine Schaltungsanordnung für ein Bordnetz, die ein Basis-Bordnetz mit einem Energiespeicher, ein Leistungs-Bordnetz mit einem zusätzlichen Energiespeicher und einen DC/DC-Wandler umfasst, wobei der DC/DC-Wandler zur Kopplung zwischen dem Basis-Bordnetz und dem Leistungs-Bordnetz vorgesehen ist.

Die Druckschrift US 2007/113814 A1 beschreibt ein Verfahren zum Ausführen eines Erststarts einer Brennkraftmaschine eines elektromechanischen Hybridfahrzeugs, das den Schritt umfasst, dass ein Hilfsenergiemodul vor dem Starten der Brennkraftmaschine aktiviert wird, um in einer Hochspannungsbatterie gespeicherte Energie bei einem Spannungspegel einer Niederspannungsbatterie durch das Hilfsenergiemodul zu leiten, um die Niederspannungsbatterie beim Antreiben eines Startermotors zum Starten der Brennkraftmaschine zu unterstützen.

Ein Verfahren zum Starten eines Fahrzeugs ist aus der Druckschrift DE 10 2010 004 620 A1 bekannt. Dabei umfasst das Fahrzeug eine erste Batterie, die mit einer Maschine gekoppelt ist, eine zweite Batterie, einen zwischen der ersten Batterie und der zweiten Batterie gekoppelten Leistungswandler sowie eine Fahrzeuganwenderanzeige. Falls hierbei ein niedriger Batteriezustand der ersten Batterie ermittelt wird, wird der Leistungswandler bei der noch ausgeschalteten Maschine aktiviert, um die erste Batterie von der zweiten Batterie aufzuladen. Weiterhin wird ein Starten der Maschine gesteuert.

### Offenbarung der Erfindung

Vor diesem Hintergrund werden ein Verfahren und eine Anordnung mit den Merkmalen der unabhängigen Patentansprüche vorgestellt. Weitere Ausgestaltungen der Erfindung ergeben sich aus den abhängigen Patentansprüchen und der Beschreibung.

Mit dem Verfahren und der Anordnung ist bspw. ein Notstart eines Kraftfahrzeugs mit einem Hybrid-System möglich, das als erste Antriebseinheit einen Verbrennungsmotor und als zweite Antriebseinheit eine entweder als Elektromotor oder Generator betreibbare elektrische Maschine aufweist.

Ein derartiges Kraftfahrzeug mit hybridisiertem Antrieb umfasst ein erstes Bordnetz mit einer ersten nominellen Spannung und ein zweites Bordnetz mit einer zweiten nominellen Spannung, wobei die erste nominelle Spannung, d. h. die erste Nennspannung, des ersten Bordnetzes (Niedrigspannungsbordnetz) geringer als die zweite nominelle Spannung und somit zweite Nennspannung des zweiten Bordnetzes (Hochspannungsbordnetz) ist. Dabei sind dem ersten Bordnetz als Energiespeicher eine erste Batterie mit der niedrigen nominellen Spannung, ein Starter, der zum Starten des Verbrennungsmotors ausgebildet ist, und weitere Verbraucher zugeordnet. Dem zweiten Bordnetz mit der hohen nominellen Spannung sind die elektrische Maschine, eine zweite Batterie mit der hohen nominellen Spannung als Energiespeicher und ggf. weitere Verbraucher zugeordnet. Alternativ ist es möglich, dass der Starter dem zweiten Bordnetz statt dem ersten Bordnetz zugeordnet ist.

Mit dem Verfahren wird berücksichtigt, dass sich die Batterie in dem ersten Bordnetz mit der geringen nominellen Spannung im Falle einer zu langen Standzeit so stark entlädt, dass mit der Batterie zu wenig Energie zum Betreiben des Starters bereitgestellt wird, so dass kein Start mehr möglich ist.

Bei Ausführung des Verfahrens kann die Startfähigkeit auch nach längeren Standzeiten aufrechterhalten werden, wobei hierzu bei einem durchzuführenden Startvorgang mittels dem DC/DC-Wandler elektrische Energie, die bspw. in der zweiten Batterie gespeichert ist, aus dem zweiten Bordnetz mit hoher nomineller Spannung in das erste Bordnetz mit niedriger nomineller Spannung gewandelt und somit übertragen wird. Durch diese Maßnahme ist es möglich, das Kraftfahrzeug auch dann zu starten, wenn dies mit der Batterie aus dem ersten Bordnetz allein nicht mehr möglich ist. Somit kann auch nach Standzeiten von mehreren Wochen eine Startfähigkeit gewährleistet werden.

Das Verfahren kann bspw. bei einem sogenannten Kaltstart oder Notstart eingesetzt werden. Bei Durchführung des Verfahrens wird der Start mit dem DC/DC-Wandler durch Übertragung von elektrischer Energie aus dem zweiten Bordnetz mit hoher Spannung in das erste Bordnetz mit niedrigerer Spannung unterstützt. Dabei wird die Startfähigkeit gewährleistet, indem durch die Unterstützung durch den DC/DC-Wandler für den durchzuführenden Startvorgang ein Istwert für die Spannung bereitgestellt wird, der größer als ein Sollwert und somit eine Mindestschwelle ist. In Ausgestaltung kann der DC/DC-Wandler bspw. einen Istwert von 12 V bereitstellen. In diesem Fall sackt die Spannung im ersten Bordnetz bei einem Spannungseinbruch nicht unter 6 V. Dabei ist die Mindestschwelle durch den Starter vorgegeben. Weiterhin kann durch Überprüfung eines Betriebsparameters, z. B. der Ladung, der Batterie entschieden werden, ob eine Startunterstützung durch den DC/DC-Wandler notwendig ist.

Üblicherweise ist vorgesehen, dass ein Startvorgang zum Starten des Kraftfahrzeugs durch einen Startwunsch, der von einem Fahrer des Kraftfahrzeugs bspw. durch Betätigung eines Zündschlüssels als Startwunschgeber signalisiert wird, eingeleitet wird. Sobald der Startwunsch vorliegt, kann bspw. von einem Steuergerät überprüft werden, ob mindestens ein Betriebsparameter der Batterie aus dem ersten Bordnetz, mit der der Starter zum Starten des Verbrennungsmotors mit elektrischer Energie zu versorgen ist, einen Istwert aufweist, der mindestens so groß wie ein Schwellwert ist. Falls der mindestens eine Betriebsparameter, üblicherweise die Spannung, der Batterie des ersten Bordnetzes den hierfür vorgesehenen Sollwert unterschreitet, wird der durchzuführende Startvorgang durch Übertragung von elektrischer Energie mit dem DC/DC-Wandler aus dem zweiten Bordnetz in das erste Bordnetz unterstützt.

Hierbei ist es möglich, dass der DC/DC-Wandler nach dem Startwunsch, aber noch vor dem eigentlich durchzuführenden Startvorgang während einer in der Regel kurzen Zeitspanne von einigen Sekunden bis maximal einigen Minuten Energie von dem zweiten Bordnetz mit der hohen nominellen Spannung in das erste Bordnetz mit der geringen nominellen Spannung wandelt und somit übermittelt oder überträgt.

Durch diese erste Maßnahme wird an Platten einer bspw. als Bleibatterie ausgebildeten ersten Batterie des ersten Bordnetzes eine erhöhte Säurebildung begünstigt, wodurch zumindest kurzzeitig ein interner Widerstand der Batterie reduziert wird.

Alternativ oder ergänzend ist es möglich, auch während des durchzuführenden Startvorgangs mit dem DC/DC-Wandler Energie von dem zweiten in das erste Bordnetz zu übertragen.

Durch diese zweite Maßnahme ergibt sich, dass beim Startvorgang deutlich weniger Strom aus der Batterie im ersten Bordnetz als sonst üblich entnommen werden muss, da zumindest ein Teil des zur Durchführung des Startvorgangs erforderlichen Stroms über den DC/DC-Wandler aus dem zweiten Bordnetz bereitgestellt und somit aus diesem entnommen werden kann.

Durch beide Maßnahmen kann ein sich beim Startvorgang ergebender Spannungseinbruch in dem ersten Bordnetz verringert werden.

Die erfindungsgemäße Anordnung ist dazu ausgebildet, sämtliche Schritte des vorgestellten Verfahrens durchzuführen. Dabei können einzelne Schritte dieses Verfahrens auch von einzelnen Komponenten der Anordnung durchgeführt werden. Weiterhin können Funktionen der Anordnung oder Funktionen von einzelnen Komponenten der Anordnung als Schritte des Verfahrens umgesetzt werden. Außerdem ist es möglich, dass Schritte des Verfahrens als Funktionen wenigstens einer Komponente der Anordnung oder der gesamten Anordnung realisiert werden.

Weitere Vorteile und Ausgestaltungen der Erfindung ergeben sich aus der Beschreibung und den beiliegenden Zeichnungen.

Es versteht sich, dass die voranstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

### Kurze Beschreibung der Zeichnungen

- Figur 1: zeigt in schematischer Darstellung eine Ausführungsform einer erfindungsgemäßen Anordnung.
- Figur 2: zeigt Diagramme zu einem Betriebsparameter, der sich bei einer ersten Ausführungsform des erfindungsgemäßen Verfahrens ergibt.
- Figur 3: zeigt Diagramme zu einem Betriebsparameter, der sich bei einer zweiten Ausführungsform des erfindungsgemäßen Verfahrens ergibt.

### Ausführungsformen der Erfindung

Die Erfindung ist anhand von Ausführungsformen in den Zeichnungen schematisch dargestellt und wird nachfolgend unter Bezugnahme auf die Zeichnungen ausführlich beschrieben.

Die Figuren werden zusammenhängend und übergreifend beschrieben, gleiche Bezugszeichen bezeichnen gleiche Komponenten.

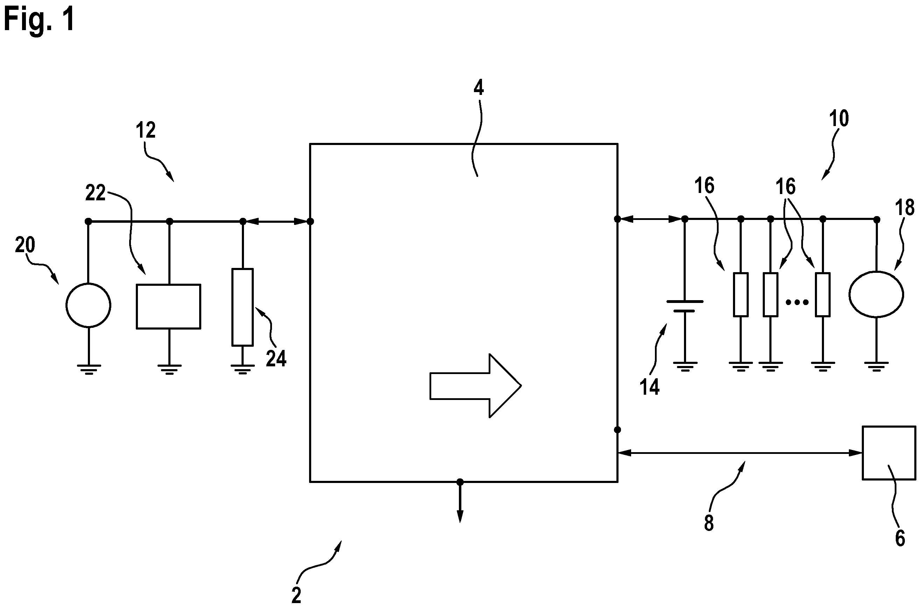

Figur 1 zeigt in schematischer Darstellung eine Ausführungsform einer erfindungsgemäßen Anordnung 2 für ein Kraftfahrzeug, die einen DC/DC-Wandler 4 sowie ein Steuergerät 6, das zum Kontrollieren und somit zum Steuern und/oder zum Regeln mindestens eines Schritts eines erfindungsgemäßen Verfahrens ausgebildet ist. Dabei ist vorgesehen, dass der DC/DC-Wandler 4 und das Steuergerät 6 über ein als CAN-Kommunikationsnetzwerk ausgebildetes Bus-Netzwerk 8 Signale austauschen können. Das Bus-Netzwerk 8 kann auch als LAN-, LIN- oder anderes Kommunikationsnetzwerk, bspw. als Flexray-Bus, ausgebildet sein.

Dabei umfasst dieses Hybrid-System ein erstes Bordnetz 10, das auch als Niedrigspannungsbordnetz bezeichnet werden kann und einen ersten Wert für eine nominelle Spannung in einem Bereich von bspw. ca. 6 bis 16 V aufweist. Außerdem umfasst dieses Hybrid-System ein zweites Bordnetz 12, das auch als Hochspannungsbordnetz bezeichnet werden kann und einen zweiten Wert für eine nominelle Spannung, die höher als der erste Wert der nominellen Spannung des ersten Bordnetzes 10 ist, aufweist. Der zweite Wert der nominellen Spannung des zweiten Bordnetzes 12 liegt bspw. zwischen ca. 12 bis 400 V.

Dem ersten Bordnetz 10 ist eine erste Batterie 14, bspw. eine Bleibatterie, die auch als Niedrigspannungsbatterie bezeichnet werden kann, mit einem geringen nominellen Wert für eine Spannung zugeordnet. Außerdem umfasst das erste Bordnetz mindestens einen als Niedrigspannungsverbraucher ausgebildeten Verbraucher 16 sowie einen Starter 18, mit dem zur Durchführung eines Startvorgangs eine als Verbrennungsmotor ausgebildete erste Antriebseinheit des Kraftfahrzeugs zu starten und somit anzulassen ist.

Das zweite Bordnetz 12 umfasst eine elektrische Maschine 20 als zweite Antriebseinheit des Kraftfahrzeugs, die je nach Betriebssituation des Kraftfahrzeugs bei Durchführung eines Hybridbetriebs entweder als Motor oder als Generator betrieben wird. Weiterhin umfasst das zweite Bordnetz 12 eine zweite, bspw. als Lithium-Ionen Batterie ausgebildete Batterie 22, die als Hochspannungsbatterie ausgebildet ist und einen nominellen Wert für eine Spannung aufweist, der höher als der nominelle Wert der Spannung der ersten Batterie 14 im ersten Bordnetz 10 ist. Diese zweite Batterie 22 wird von der elektrischen Maschine 20 mit elektrischer Energie geladen, wenn diese als Generator betrieben wird. Zudem kann das zweite Bordnetz 12 mindestens einen als Hochspannungsverbraucher ausgebildeten Verbraucher 24 umfassen.

Zur Durchführung eines Dauerbetriebs des Kraftfahrzeugs, bei dem zumindest eine der genannten Antriebseinheiten, d. h. der Verbrennungsmotor und/oder die elektrische Maschine 20 betrieben wird, kann mit dem DC/DC-Wandler 4 zwischen den beiden Bordnetzen 10, 12 je nach Bedarf Energie gewandelt und somit ausgetauscht werden. Außerdem sind die elektrische Maschine 20 und der Starter 18 mit der Masse verbunden.

Mit der Anordnung 2 ist eine Ausführungsform des erfindungsgemäßen Verfahrens zum Starten des Kraftfahrzeugs durchführbar, wobei dieses Kraftfahrzeug das erste Bordnetz 10, dem der Starter 18 und die erste Batterie 14 zugeordnet ist, das zweite Bordnetz 12, dem die elektrische Maschine 20 zugeordnet ist, und den DC/DC-Wandler 4 zum Verbinden der beiden Bordnetze 10, 12 aufweist. Zum Starten wird elektrische Energie von dem zweiten Bordnetz 12 über den DC/DC-Wandler 4 in das erste Bordnetz 10 gewandelt und demnach transferiert, falls ein Istwert mindestens eines Betriebsparameters, bspw. der Spannung, der ersten Batterie 14 vor einem durchzuführenden Startvorgang einen Sollwert unterschreitet.

In Ausgestaltung wird der Istwert des mindestens einen Betriebsparameters der ersten Batterie 14 bei einem Startwunsch zum Einleiten und/oder Durchführen des Startvorgangs von dem Steuergerät 6 über einen Sensor mindestens einmal überprüft. Hierzu ist es möglich, beispielsweise mit Hilfe eines Batterie-Sensors einen Istwert des mindestens einen Betriebsparameters, bspw. der aktuellen Ladung oder Spannung, zu bestimmen. Mindestens ein dabei ermittelter Istwert des Betriebsparameters, d. h. der Ladung und/oder Spannung, kann mit dem vorgesehenen Sollwert verglichen werden. Falls der Istwert der Ladung und/oder Spannung der ersten Batterie 14 mindestens so groß wie der Sollwert ist, ist die Startfähigkeit der ersten Batterie 14 gewährleistet. Alternativ kann die Überprüfung des Istwerts auch direkt im DC/DC-Wandler 4 erfolgen.

Damit das Verfahren durchgeführt werden kann, kann bedarfsweise vorgesehen sein, den DC/DC-Wandler 4 auch mit Energie aus dem zweiten Bordnetz 12 statt lediglich aus dem ersten Bordnetz 10 zu versorgen.

Der DC/DC-Wandler 4 weist einen Signaleingang auf, über den der DC/DC-Wandler 4 über das Bus-Netzwerk 8 mit dem Steuergerät 6 verbunden ist, das dem DC/DC-Wandler 4 ein Signal bereitstellt, das den DC/DC-Wandler 4 dazu veranlasst, elektrische Energie von dem zweiten Bordnetz 12 in das erste Bordnetz 10 nach dem Startwunsch zu wandeln.

Das Steuergerät 6 ist dazu ausgebildet, den Istwert des mindestens einen Betriebsparameters der ersten Batterie 14, sobald ein Startwunsch vorliegt, zu überprüfen. Hierbei wird die Startfähigkeit der ersten Batterie 14 überprüft. Das Steuergerät 6 kann zudem dazu ausgebildet sein, eine Funktion des DC/DC-Wandlers 4 zu kontrollieren.

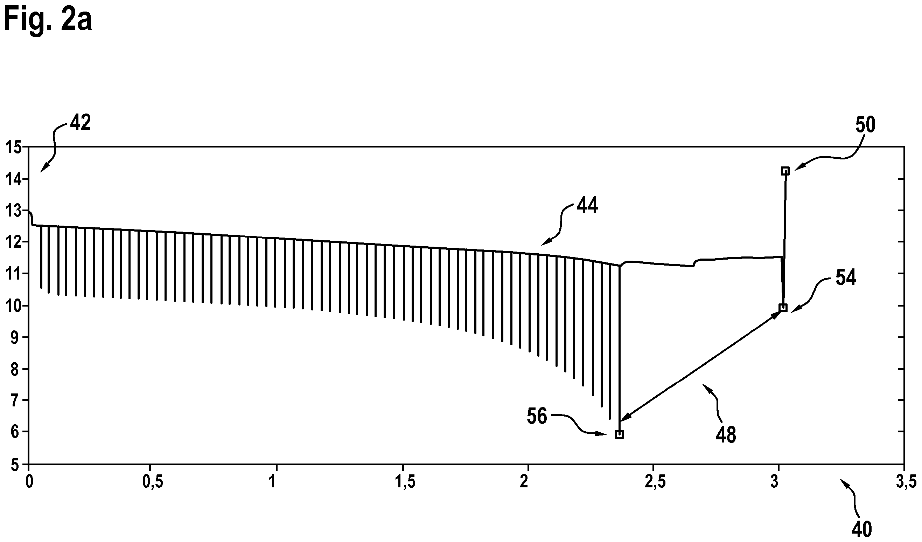

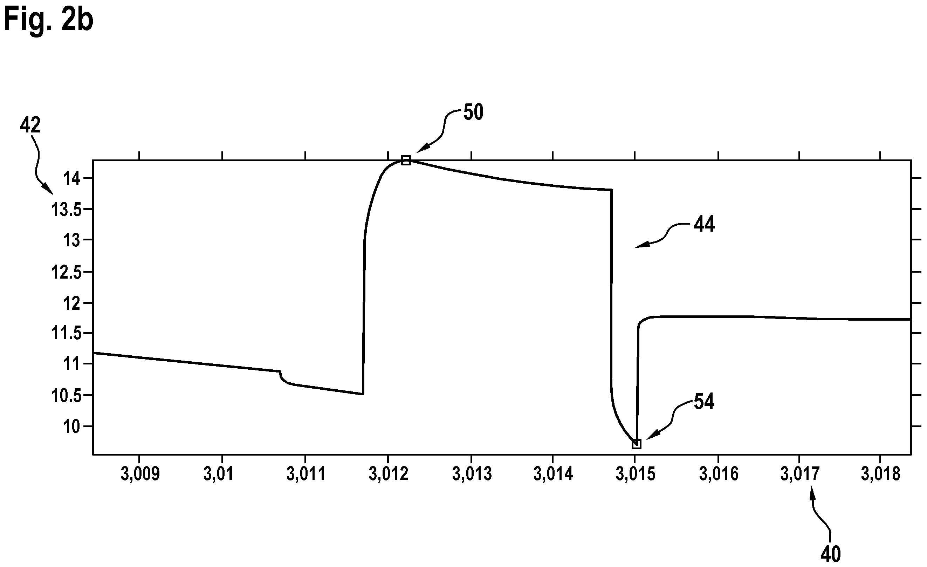

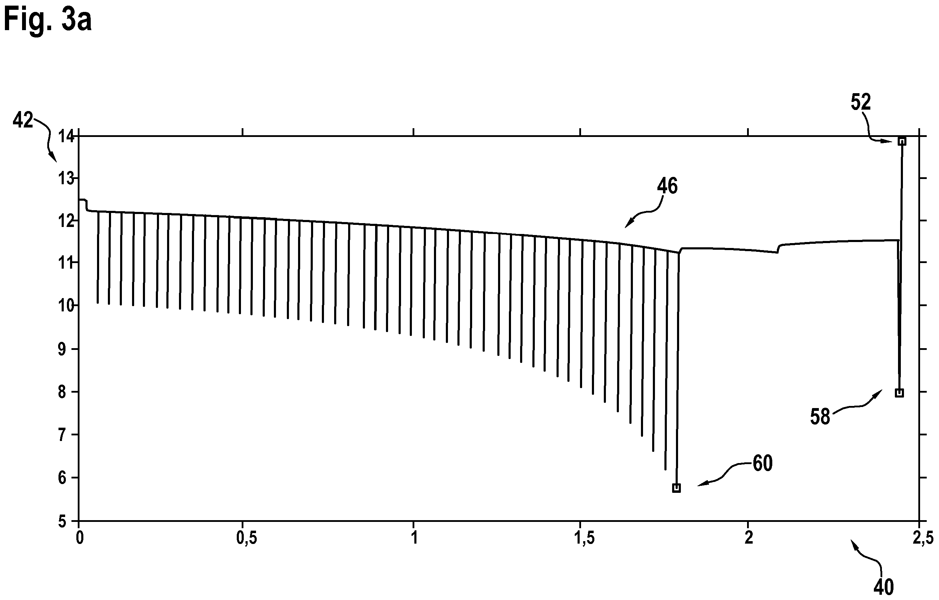

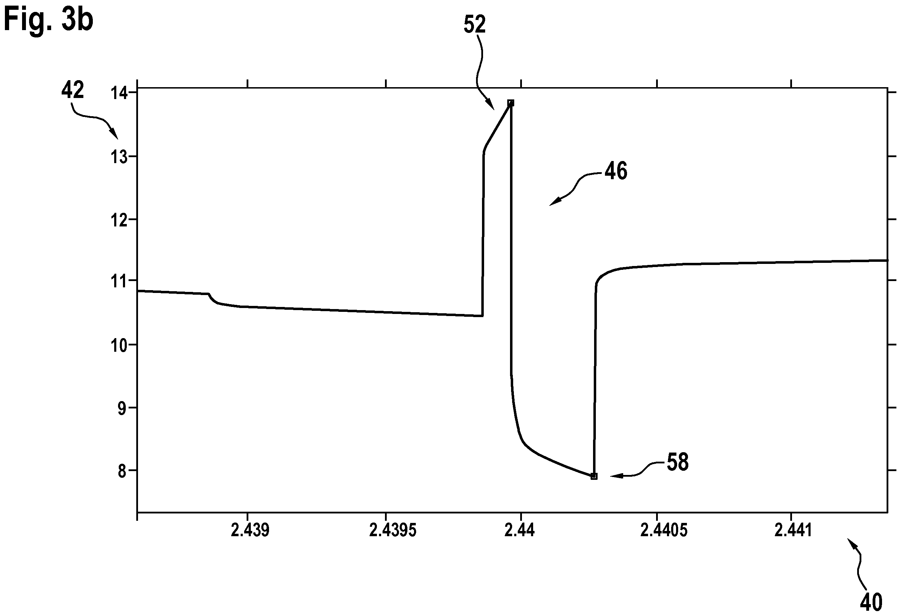

Mit der voranstehend beschrieben Ausführungsform der erfindungsgemäßen Anordnung 2 kann mindestens eine der anhand der Diagramme aus den nachfolgenden Figuren 2 und 3 beschriebenen Ausführungsformen des erfindungsgemäßen Verfahrens durchgeführt werden.

Die beiden Diagramme aus den Figuren 2a und 2b umfassen jeweils eine Abszisse 40, entlang der eine Zeit in 10⁴ s aufgetragen ist. Über der Abszisse ist eine Ordinate 42 aufgetragen, entlang der ein Wert einer Spannung der ersten Batterie 14 des ersten Bordnetzes 10 aufgetragen ist. Weiterhin zeigt das Diagramm aus Figur 2b einen vergrößerten Ausschnitt des Diagramms aus Figur 2a und das Diagramm aus Figur 3b einen vergrößerten Ausschnitt des Diagramms aus Figur 3a.

In dem Diagramm aus Figur 2a ist ein erster möglicher Verlauf 44 eines Istwerts der Spannung über einen längeren Zeitraum dargestellt. Figur 2b zeigt ein Detail dieses Verlaufs 44, wenn der Startvorgang durch den DC/DC-Wandler 4 unterstützt wird.

Der erste Teil des Diagramms aus Figur 2a zeigt im Zeitabschnitt von 0 bis ca. 2,4 10⁴ s mehrere, d. h. hier 66, Startvorgänge ohne Unterstützung durch den DC/DC-Wandler 4. Mit diesen Startvorgängen wird die Batterie 14 soweit entladen, dass ein Startvorgang aus der Batterie 14 alleine nicht mehr möglich ist. Im nächsten Zeitabschnitt wird die Batterie 14 weiter entladen, um eine längere Standzeit zu simulieren. In dem Zeitabschnitt von ca. 2,6 bis 3,1 10⁴ s wird die Batterie ruhen gelassen. Erst der darauffolgende Zeitabschnitt, der im Diagramm aus Figur 2b vergrößert dargestellt ist, zeigt einen Start mit Unterstützung durch den DC/DC-Wandler 4. Wie das Diagramm aus Figur 2a zeigt, wird die Startfähigkeit nur durch die Unterstützung durch den DC/DC-Wandler 4 ermöglicht. Der Spannungseinbruch 54 im Startfall mit Unterstützung durch den DC/DC-Wandler 4 ist deutlich geringer als der Spannungseinbruch 56 im Startfall ohne die Unterstützung durch den DC/DC-Wandler 4.

Figur 3a zeigt einen Verlauf 46 eines Istwerts der Spannung der ersten Batterie 14, wenn diese durch mehrere nacheinander durchgeführte Startvorgänge in einem Zeitabschnitt bis ca. 1,8 10⁴ s entladen wird. Danach wird die Batterie 14 bis zum Startvorgang (Diagramm aus Figur 3b), der zu ca. 2,44 10⁴ s von dem DC/DC-Wandler 4 durchgeführt wird, unterstützt.

Dabei ist bei der ersten Ausführungsform (Diagramme aus Figur 2) des Verfahrens vorgesehen, dass eine Ladezeit der ersten Batterie 14 bspw. 30 s umfasst. Bei der zweiten Ausführungsform (Diagramme aus Figur 3) des Verfahrens umfasst die Ladezeit der ersten Batterie 14 nur 1 s. Die Ladezeit ist hier nur exemplarisch gezeigt, und kann an den jeweiligen Bedarf eines Kraftfahrzeugs angepasst werden.

Bei beiden Ausführungsformen des erfindungsgemäßen Verfahrens kann der durch den Start hervorgerufene Spannungseinbruch der ersten Batterie 14 und somit in dem ersten Bordnetz 10 verringert werden. Dabei wird der Istwert der Spannung der ersten Batterie 14 durch das Steuergerät 6, nachdem der Startwunsch signalisiert wurde, ermittelt.

Außerdem kann bei zumindest einigen von zuvor durchgeführten Startvorgängen ein Wert für den Spannungseinbruch und/oder ein Istwert der ersten Batterie 14 von dem Steuergerät 6 registriert und gespeichert werden. Weiterhin kann von dem Steuergerät 6 auch ein letzter Istwert der ersten Batterie 14 bei einem zuletzt durchgeführten Abschalten des Kraftfahrzeugs gespeichert werden.

Außerdem kann berücksichtigt werden, wieviel Zeit zwischen dem letzten Abschalten des Kraftfahrzeugs und dem aktuellen Startwunsch verstrichen ist. Unter Berücksichtigung dieser genannten Betriebsparameter kann durch das Steuergerät 6 ermittelt werden, ob der von dem Starter 18 durchzuführende Start durch Wandlung von elektrischer Energie aus dem zweiten Bordnetz 12 über den DC/DC-Wandler 4 in das erste Bordnetz unterstützt werden soll und wieviel Energie hierbei zu wandeln und somit zu übermitteln ist. Es ist auch möglich, dass der DC/DC-Wandler 4 über einen Signaleingang mindestens einen Betriebsparameter der ersten Batterie 14 einliest und demnach auch die Funktion des Steuergeräts 6 übernehmen kann.

Falls die Startfähigkeit nicht mehr gewährleistet sein sollte, was bedeutet, dass der Istwert der Spannung als möglicher Betriebsparameter beim Starten unterhalb eines Schwellwerts von bspw. 6 V sinkt, kann dies beispielsweise durch einen Istwert des Ladezustands SOC (state of charge) als weiteren Betriebsparameter der ersten Batterie 14 überprüft werden. Weiterhin veranlasst eine im Steuergerät 6 angeordnete und somit integrierte Leistungssteuereinheit für einen Zeitraum von x s, bspw. x = 30 s (Figur 2) oder x = 1 s (Figur 3), dass der DC/DC-Wandler 4 einen hohen Strom von bspw. I = 220 A von dem zweiten Bordnetz 12 mit hoher nomineller Spannung zu dem ersten Bordnetz 10 mit geringer nomineller Spannung wandelt, wobei die Verbraucher 16 einen Strom von bspw. I<=50 A ziehen. Von der ersten Batterie 14 wird der komplette restliche Strom aufgenommen. Danach wird der eigentliche Startvorgang durchgeführt.

Durch das kurzzeitige Aufladen über den DC/DC-Wandler 4 steigt der Säuregehalt an Platten der ersten Batterie 14 stark an. Je länger Strom von dem DC/DC-Wandler 4 aus dem zweiten Bordnetz 12 in das erste Bordnetz 10 gewandelt und somit die erste Batterie 14 geladen wird, desto niedriger ist der Wert 54 (Figur 2), 58 (Figur 3) des im Rahmen des Verfahrens erreichbaren Spannungseinbruchs. Dabei wird der Wert 54 für den Spannungseinbruch in der vorliegenden Ausführungsform bei einer Ladezeit von 30 s erreicht, wohingegen der Wert 58 des Werts für den Spannungseinbruch bei einer Ladezeit von 1 s erreicht wird.

Bei der ersten Ausführungsform des erfindungsgemäßen Verfahrens (Figur 2) sinkt der Wert der Spannung bei den zuvor durchgeführten Entladungen von dem maximal erreichten Wert 50 auf einen Wert 54 von hier 9,72 V ab, der jedoch höher als ein Wert 56 von 5,92 V ist. Entsprechend sinkt bei der zweiten Ausführungsform (Figur 3) des Verfahrens die Spannung von dem maximal erreichbaren Wert 52 beim Startvorgang auf einen Wert 58 von 7,9 V ab, der jedoch höher als ein Wert 60 von 5,92 V ist. Die Werte 56, 60 ergeben sich ohne Unterstützung durch den DC/DC-Wandler 4.

Ein großer Anteil des zum Durchführen des Startvorgangs benötigten Stroms wird, gesteuert durch die Leistungssteuereinheit in dem Steuergerät 6, über den DC/DC-Wandler 4 dem ersten Bordnetz 10 aus dem zweiten Bordnetz 12 bereitgestellt, wodurch die erste Batterie 14 deutlich weniger belastet wird. Daraus ergibt sich, dass die Startfähigkeit durch Unterstützung aus dem zweiten Bordnetz 12 bereits bei einer Ladung über einer Zeit von nur 1 s ermöglicht wird.

Falls es nicht möglich sein sollte, eine Steuerung des DC/DC-Wandlers 4 bei einem sogenannten Notstartbetrieb über das Bus-Netzwerk 8 zu kontrollieren, da bspw. die erste Batterie 14 zu schwach ist und Teilnehmer des Netzwerks 8 nur unzureichend mit Energie versorgt werden, kann der DC/DC-Wandler 4 mit einem zusätzlichen Signaleingang versehen und somit ausgestattet werden. Falls über diesen zusätzlichen Signaleingang ein Signal bereitgestellt wird, kann der DC/DC-Wandler 4 in einen Notstartbetrieb wechseln und gemäß eines vorgegebenen, internen Sollwerts, der als Parameter definiert ist, für mindestens eine bestimmte Zeit elektrische Energie von dem zweiten Bordnetz 12 in das erste Bordnetz 10 wandeln.

Der DC/DC-Wandler 4 kann entweder aus dem ersten Bordnetz 10 oder optional auch aus dem zweiten Bordnetz 12, das eine höhere nominelle Spannung aufweist, mit Energie versorgt werden. Falls der DC/DC-Wandler 4 auch aus dem zweiten Bordnetz 12 mit elektrischer Energie versorgt wird, kann der Startvorgang, bspw. ein Notstartvorgang, auch bei zusätzlich verlängerter Standzeit des Kraftfahrzeugs durchgeführt werden.

## Patentansprüche

1. Verfahren zum Starten eines Verbrennungsmotors eines Kraftfahrzeugs, das ein erstes Bordnetz (10), dem eine Batterie (14) des Kraftfahrzeugs zugeordnet ist, ein zweites Bordnetz (12), dem eine elektrische Maschine (20) des Kraftfahrzeugs zugeordnet ist, und einen DC/DC-Wandler (4) zum Verbinden der beiden Bordnetze (10, 12) aufweist, wobei zum Starten elektrische Energie von dem zweiten Bordnetz (12) über den DC/DC-Wandler (4) in das erste Bordnetz (10) gewandelt wird, falls ein Istwert mindestens eines Betriebsparameters der Batterie (14) vor einem durchzuführenden Startvorgang einen Sollwert unterschreitet,
**dadurch gekennzeichnet, dass**
bei einer Ermittlung, wieviel Energie gewandelt wird, berücksichtigt wird, wieviel Zeit zwischen einem letzten Abschalten des Kraftfahrzeugs und einem aktuellen Startwunsch verstrichen ist.

2. Verfahren nach Anspruch 1, bei dem die elektrische Energie vor dem Startvorgang von dem zweiten Bordnetz (12) über den DC/DC-Wandler (4) in das erste Bordnetz (10) gewandelt wird.

3. Verfahren nach Anspruch 1 oder 2, bei dem die elektrische Energie während dem Startvorgang von dem zweiten Bordnetz (12) über den DC/DC-Wandler (4) in das erste Bordnetz (10) gewandelt wird.

4. Verfahren nach einem der voranstehenden Ansprüche, bei dem elektrische Energie von dem zweiten Bordnetz (12) über den DC/DC-Wandler (4) in das erste Bordnetz (10) gewandelt wird, falls ein Istwert einer Spannung als der mindestens eine Betriebsparameter der Batterie (14) vor dem durchzuführenden Startvorgang einen Sollwert unterschreitet.

5. Verfahren nach einem der voranstehenden Ansprüche, das für ein Kraftfahrzeug durchgeführt wird, bei dem das zweite Bordnetz (12) eine höhere nominelle Spannung als das erste Bordnetz (10) aufweist.

6. Verfahren nach einem der voranstehenden Ansprüche, bei dem der Istwert des mindestens einen Betriebsparameters der Batterie (14) bei dem Startwunsch zum Einleiten des Startvorgangs überprüft wird.

7. Verfahren nach einem der voranstehenden Ansprüche, bei dem der DC/DC-Wandler (4) mit Energie aus dem zweiten Bordnetz (12) versorgt wird.

8. Anordnung zum Starten eines Verbrennungsmotors eines Kraftfahrzeugs, das ein erstes Bordnetz (10), dem eine Batterie (14) des Kraftfahrzeugs (20) zugeordnet ist, ein zweites Bordnetz (12), dem eine elektrische Maschine (20) des Kraftfahrzeugs zugeordnet ist, und einen DC/DC-Wandler (4) zum Verbinden der beiden Bordnetze (10, 12) aufweist, wobei der DC/DC-Wandler (4) als Komponente der Anordnung (2) dazu ausgebildet ist, zum Starten elektrische Energie von dem zweiten Bordnetz (12) in das erste Bordnetz (10) zu wandeln, falls ein Istwert mindestens eines Betriebsparameters der Batterie (14) vor einem durchzuführenden Startvorgang einen Sollwert unterschreitet, **dadurch gekennzeichnet, dass** von einem Steuergerät (6) der Anordnung (2) zu ermittelt ist, wieviel Energie zu wandeln ist, wobei zu berücksichtigen ist, wieviel Zeit zwischen einem letzten Abschalten des Kraftfahrzeugs und einem aktuellen Startwunsch verstrichen ist.

9. Anordnung nach Anspruch 8, bei der der DC/DC-Wandler (4) einen Signaleingang aufweist, über den dem DC/DC-Wandler (4) ein Signal bereitzustellen ist, das den DC/DC-Wandler (4) dazu veranlasst, elektrische Energie von dem zweiten Bordnetz (12) in das erste Bordnetz (10) zu wandeln.

10. Anordnung nach Anspruch 8 oder 9, bei der das Steuergerät (6) dazu ausgebildet ist, den Istwert des mindestens einen Betriebsparameters der Batterie (14) zu überprüfen und eine Funktion des DC/DC-Wandlers (4) zu kontrollieren.

11. Anordnung nach einem der Ansprüche 8 bis 10 bei der der DC/DC-Wandler (4) die Funktion des Steuergeräts (6) übernimmt und einen Signaleingang aufweist, um mindestens einen Betriebsparameter der Batterie (14) einzulesen.

## Claims

1. Method for starting an internal combustion engine of a motor vehicle, which has a first on-board power system (10) to which a battery (14) of the motor vehicle is assigned, a second on-board power system (12) to which an electric machine (20) of the motor vehicle is assigned, and a DC/DC converter (4) for connecting the two on-board power systems (10, 12), wherein for the purpose of starting electrical energy from the second on-board power system (12) is converted into the first on-board power system (10) via the DC/DC converter (4) if an actual value of at least one operating parameter of the battery (14) drops below a setpoint value before a starting process which is to be carried out,
**characterized in that**
when determining how much energy is converted it is taken into account how much time has passed between a last deactivation of the motor vehicle and a current starting request.

2. Method according to Claim 1, in which before the starting process the electrical energy from the second on-board power system (12) is converted into the first on-board power system (10) via the DC/DC converter (4).

3. Method according to Claim 1 or 2, in which during the starting process the electrical energy from the second on-board power system (12) is converted into the first on-board power system (10) via the DC/DC converter (4).

4. Method according to one of the preceding claims, in which electrical energy from the second on-board power system (12) is converted into the first on-board power system (10) via the DC/DC converter (4) if an actual value of a voltage, as the at least one operating parameter of the battery (14), drops below a setpoint value before the starting process which is to be carried out.

5. Method according to one of the preceding claims, which is carried out for a motor vehicle in which the second on-board power system (12) has a higher nominal voltage than the first on-board power system (10).

6. Method according to one of the preceding claims, in which the actual value of the at least one operating parameter of the battery (14) is checked at the starting request for the initiation of the starting process.

7. Method according to one of the preceding claims, in which the DC/DC converter (4) is supplied with energy from the second on-board power system (12).

8. Arrangement for starting an internal combustion engine of a motor vehicle which has a first on-board power system (10) to which a battery (14) of the motor vehicle (20) is assigned, a second on-board power system (12), an electrical machine (20) of the motor vehicle is assigned, and a DC/DC converter (4) for connecting the two on-board power systems (10, 12), wherein the DC/DC converter (4) is embodied as a component of the arrangement (2) for converting electrical energy from the second on-board power system (12) into the first on-board power system (10) for the purpose of starting, if an actual value of at least one operating parameter of the battery (14) drops below a setpoint value before a starting process which is to be carried out,
**characterized in that**
a control device (6) of the arrangement (2) is to determine how much energy is to be converted, wherein it is to be considered how much time has passed between a last deactivation of the motor vehicle and a current starting request.

9. Arrangement according to Claim 8, in which the DC/DC converter (4) has a signal input via which the DC/DC converter (4) is to be provided with a signal which causes the DC/DC converter (4) to convert electrical energy from the second on-board power system (12) into the first on-board power system (10).

10. Arrangement according to Claim 8 or 9, in which the control device (6) is designed to check the actual value of the at least one operating parameter of the battery (14) and to control a function of the DC/DC converter (4) .

11. Arrangement according to one of Claims 8 to 10, in which the DC/DC converter (4) performs the function of the control device (6) and has a signal input in order to input at least one operating parameter of the battery (14) .

## Revendications

1. Procédé de démarrage d'un moteur à combustion interne d'un véhicule automobile qui comporte un premier réseau de bord (10) auquel est associée une batterie (14) du véhicule automobile, un deuxième réseau de bord (12) auquel est associée une machine électrique (20) du véhicule automobile, et un convertisseur continu/continu (4) destiné à relier les deux réseaux de bords (10, 12), dans lequel pour effectuer le démarrage, de l'énergie électrique provenant du deuxième réseau de bord (12) est convertie par le convertisseur continu/continu (4) et injectée dans le premier réseau de bord (10) si une valeur réelle d'au moins un paramètre de fonctionnement de la batterie (14) devient inférieure à une valeur de consigne avant qu'un processus de démarrage ne soit effectué,
**caractérisé en ce que**
le temps écoulé entre la dernière mise hors tension du véhicule automobile et une demande de démarrage en cours est pris en compte lors d'une détermination de la quantité d'énergie convertie.

2. Procédé selon la revendication 1, dans lequel l'énergie électrique provenant du deuxième réseau de bord (12) est convertie par le convertisseur continu/continu (4) et injectée dans le premier réseau de bord (10) avant le processus de démarrage.

3. Procédé selon la revendication 1 ou 2, dans lequel l'énergie électrique provenant du deuxième réseau de bord (12) est convertie par le convertisseur continu/continu (4) et injectée dans le premier réseau de bord (10) pendant le processus de démarrage.

4. Procédé selon l'une des revendications précédentes, dans lequel de l'énergie électrique provenant du deuxième réseau de bord (12) est convertie par le convertisseur continu/continu (4) et injectée dans le premier réseau de bord (10) si une valeur réelle d'une tension utilisée comme au moins un paramètre de fonctionnement de la batterie (14) devient inférieure à une valeur de consigne avant d'exécuter le processus de démarrage.

5. Procédé selon l'une des revendications précédentes, lequel est mis en œuvre pour un véhicule automobile dans lequel le deuxième réseau de bord (12) a une tension nominale supérieure à celle du premier réseau de bord (10).

6. Procédé selon l'une des revendications précédentes, dans lequel la valeur réelle de l'au moins un paramètre de fonctionnement de la batterie (14) est vérifiée au moment de la demande de démarrage pour amorcer le processus de démarrage.

7. Procédé selon l'une des revendications précédentes, dans lequel le convertisseur continu/continu (4) est alimenté en énergie à partir du deuxième réseau de bord (12).

8. Ensemble de démarrage d'un moteur à combustion interne d'un véhicule automobile qui comporte un premier réseau de bord (10) auquel est associée une batterie (14) du véhicule automobile (20), un deuxième réseau de bord (12) auquel est associée une machine électrique (20) du véhicule automobile, et un convertisseur continu/continu (4) destiné à relier les deux réseaux de bord (10, 12), le convertisseur continu/continu (4) étant conçu, en tant que composant de l'ensemble (2), pour convertir de l'énergie électrique provenant du deuxième réseau de bord (12) et l'injecter dans le premier réseau de bord (10) pour effectuer le démarrage si une valeur réelle d'au moins un paramètre de fonctionnement de la batterie (14) devient inférieure à une valeur de consigne avant d'exécuter un processus de démarrage,
**caractérisé en ce que**
un dispositif de commande (6) de l'ensemble (2) détermine la quantité d'énergie à convertir en tenant compte du temps écoulé entre le dernier arrêt du véhicule automobile et une demande de démarrage en cours.

9. Ensemble selon la revendication 8, dans lequel le convertisseur continu/continu (4) comporte une entrée de signal permettant de fournir au convertisseur continu/continu (4) un signal qui ordonne au convertisseur continu/continu (4) de convertir de l'énergie électrique provenant du deuxième réseau de bord de véhicule (12) et de l'injecter dans le premier réseau de bord (10).

10. Ensemble selon la revendication 8 ou 9, dans lequel le dispositif de commande (6) est conçu pour vérifier la valeur réelle de l'au moins un paramètre de fonctionnement de la batterie (14) et pour commander une fonction du convertisseur continu/continu (4).

11. Ensemble selon l'une des revendications 8 à 10, dans lequel le convertisseur continu/continu (4) prend en charge la fonction du dispositif de commande (6) et comporte une entrée de signal destinée à lire au moins un paramètre de fonctionnement de la batterie (14).
